# EUROPÄISCHE PATENTSCHRIFT

(11) **EP 2 405 093 B1**
(45) Veröffentlichungstag und Bekanntmachung des Hinweises auf die Patenterteilung: **29.04.2020**
(21) Anmeldenummer: 11005086.1
(22) Anmeldetag: 22.06.2011
(51) Int. Cl.: E06B 3/62, E06B 5/16, B32B 17/06, E04B 2/74, E06B 3/30, E06B 3/54

(54) **Modulare Brandschutzverglasung**
Modular flame retardant glazing
Verrière ignifuge modulaire

(30) Priorität: 07.07.2010 DE 202010009999 U
(43) Veröffentlichungstag der Anmeldung: 11.01.2012
(73) Patentinhaber: Holzbau Schmid GmbH & Co. KG, 73099 Adelberg (DE)
(72) Erfinder: Schmid. C, 73099 Adelberg (DE)
(74) Vertreter: Ring & Weisbrodt

(56) Entgegenhaltungen:
- EP-A2- 1 020 605
- DE-A1- 2 451 890
- DE-A1- 19 929 664
- DE-T2- 69 611 396
- GB-A- 2 401 141

## Beschreibung

Die vorliegende Erfindung betrifft eine Brandschutzverglasung zur Vermeidung des Durchtritts von Feuer und Rauch im Brandfall von einem Raum in einen anderen, mit wenigstens einer Brandschutzscheibe und einer die Brandschutzscheibe tragenden Haltekonstruktion, wobei die Brandschutzscheibe aus zumindest zwei parallel beabstandeten und mittels eines randseitig umlaufend ausgebildeten Randverbunds miteinander verbundenen Glasscheiben aufgebaut ist und der Randverbund unter Ausbildung einer Nut von den Stoßkanten der Glasscheiben zurückspringt. Die Erfindung betrifft weiterhin ein Verfahren zur Erstellung einer solchen Brandschutzverglasung.

Brandschutzverglasungen sind im Stand der Technik in unterschiedlichen Ausführungsformen bekannt. Für eine Brandschutzverglasung werden üblicherweise mehrere Brandschutzscheiben mittels geeigneter Halterungen miteinander verbunden. Dabei werden häufig Brandschutzscheiben verwendet, die mehrlagig aufgebaut sind, wobei die äußeren Lagen jeweils durch eine Glasscheibe gebildet sind. Zwischen diesen äußeren Glasscheiben kann beispielsweise eine intumeszierende Funktionsschicht eingefügt sein. In der DE 3508078(A1) ist eine solche Konstruktion beschrieben, bei der die einzelnen Brandschutzscheiben durch eine die Stoßkanten der Brandschutzscheibe umgreifenden Rahmenkonstruktion gehalten werden. Die Rahmenkonstruktion besteht aus Metallprofilträgern, die untereinander mittels Steckverbindungen verbunden werden können. Bei diesem Aufbau wird es als nachteilig empfunden, dass die Rahmenkonstruktion aufwändig herzustellen ist und außerdem das optische Erscheinungsbild sowie den Lichtdurchtritt durch die Verglasung stört.

In der europäischen Patentanmeldung EP 0 658 677 A1 wird eine rahmenlose Brandschutzverglasung vorgeschlagen, bei der Brandschutzscheiben an einer freistehenden Stützkonstruktion befestigt werden. Die einzelnen Brandschutzscheiben werden bei dieser Lösung mittels Halterungen fixiert, bei denen auf den beiden Seiten der Brandschutzscheibe korrespondierende Stützplatten vorgesehen sind, die mittels einer durch die Brandschutzscheibe hindurch geführten Verschraubung miteinander verbunden werden und auf diese Weise die dazwischen befindliche Brandschutzscheibe im Klemmsitz halten. Als teilweise nachteilig bei diesen Halterungen wird es angesehen, dass aufgrund der durch die Scheibe dringenden Verschraubung und dem auf diese Weise realisierten Klemmsitz nur massive Brandschutzscheiben bzw. Verbund-Brandschutzscheiben aus feuerfestem Glas mit zwischen den Glasscheiben liegenden festen intumeszierenden Schichten eingesetzt werden können. Außerdem wird die notwendigerweise im Innenraum fixierte freistehende Stützkonstruktion teilweise als störend empfunden oder es fehlt gar an dem für den Aufbau erforderlichen Platz.

Darüber hinaus sind aus dem deutschen Gebrauchsmuster DE 29819678 U1 Brandschutzverglasungen bekannt, bei denen die vertikalen Stoßfugen der Brandschutzscheiben durch ein Dichtungsmittel verfüllt sind. Nachteilig bei derartigen Brandschutzverglasungen ist, dass das Versiegeln der Anschlussfugen einen aufwendigen und somit kostenintensiven Arbeitsschritt darstellt. Zudem sind derartige Brandschutzverglasungen nicht ohne weiteres demontierbar und insofern nicht variabel einsetzbar. Zur Demontage einer solchen Brandschutzverglasung ist es in der Regel erforderlich, das ausgehärtete Dichtmittel herauszuschneiden. Für eine Wieder- beziehungsweise Weiterverwendung der Brandschutzscheiben und Halterungen ist es somit erforderlich, diese zunächst zu reinigen, um anhaftende Reste des Dichtmittels zu entfernen. Da die Dichtungsmassen sich in der Regel nicht durch Lösungsmittel entfernen lassen, ist die Reinigung aller Bauteile aufwendig und praktisch nur auf mechanischem Wege möglich.

Die EP 1 020 605 A2 offenbart eine Befestigungsvorrichtung für Beschlagteile eines rahmenlosen Glasflügels, der als drehbarer oder ortsfester Flügel einer Tür, eines Fensters oder einer ortsfesten Fassade ausgebildet ist. Der Glasflügel weist zwei parallele, zueinander beabstandete Scheiben und einen am Außenbereich der Scheiben umlaufenden Abstandshalter auf, welcher den Innenraum der Scheiben dicht umschließt, wobei der Abstandshalter im Außenbereich der Scheiben Freiräume zur

Aufnahme eines Trage- und Bandabschlusselements bildet, welches mit den Scheiben verklebt ist.

Die DE 24 51 890 A1 offenbart eine Anordnung zur abdichtenden Halterung einer Glasscheibe an einem Rahmen, mit einer umlaufenden Dichtungsleiste und am Rahmen verankerten Spannmitteln zum Erzeugen einer die Dichtungsleiste gegen die Glasscheibe anpressenden Vorspannung, wobei die Dichtungsleiste unter Vorspannung gegen die Umfangsschmalseiten der Glasscheibe anliegt und weder die Dichtungsleiste noch der Rahmen in Längsrichtung durchgehende, die vorder- oder rückseitigen Frontflächen der Scheibe wesentlich übergreifende Teile aufweist.

Die GB 2 404 141 A1 offenbart eine verglaste Wand, umfassend eine Vielzahl von Pfosten, an denen die Verglasung befestigt ist, wobei jedem Pfosten Bolzen ein Verglasungsrahmen zugeordnet ist und wobei jeder Verglasungsrahmen mindestens ein extrudiertes Rahmenelement mit einem länglichen Arm umfasst, der bei der Montage mit der Verglasung in Kontakt steht. Jeder Arm weist dabei eine offene Aussparung für Heißkleber auf und kann bei der Montage eine geriffelte Oberfläche aufweisen, die in die Verglasung eingreift.

All diesen beschriebenen Lösungen ist ein weiterer Nachteil gemein, der darin besteht, dass diese Brandschutzverglasungen wenig bis gar nicht variabel im Aufbau sind und im Allgemeinen speziell an die örtlichen Abmessungen der Räumlichkeiten, in die die Brandschutzverglasung eingezogen werden soll, anzupassen sind. Deshalb kann mit den Vorbereitungsarbeiten an den einzelnen Elementen der Brandschutzverglasung nicht begonnen werden, bevor nicht die exakten Abmessungen der Räumlichkeiten bekannt sind, was beim schnellen Bau nicht selten vorkommt und deshalb zu zeitlichen Verzögerungen führen kann.

Der vorliegenden Erfindung liegt die Aufgabe zugrunde, die aus dem Stand der Technik bekannten Probleme zu beseitigen und eine Brandschutzverglasung zu schaffen, die variabel an die örtlichen Gegebenheiten angepasst werden kann, konstruktiv einfach gehalten ist und einfach auf- und wieder abgebaut werden kann, ohne dass die Bauteile vor der Wiederverwendung aufwendig gereinigt werden müssten. Die Brandschutzverglasung soll trotzdem eine optisch ansprechende Gestaltung und einen hohen Lichtdurchtritt ermöglichen sowie gleichzeitig vorgeschriebene Brandschutzforderungen erfüllen.

Diese Aufgabe wird dadurch gelöst, dass für die Brandschutzverglasung solche Brandschutzscheiben gewählt werden, die über eine randseitig umlaufend ausgebildete Nut verfügen und zur Verbindung mehrerer solcher in einer Ebene angeordneten Brandschutzscheiben ein als Feder ausgebildetes Verbindungselement in die Nut der Brandschutzscheibe formschlüssig eingesetzt ist. In hierzu analoger Weise können solche Scheiben an der Haltekonstruktion befestigt werden.

Ein Gegenstand der vorliegenden Erfindung besteht somit aus einer Brandschutzverglasung zur Vermeidung des Durchtritts von Feuer und Rauch im Brandfall von einem Raum in einen anderen, mit wenigstens einer Brandschutzscheibe und einer die Brandschutzscheibe tragenden Haltekonstruktion, wobei die Brandschutzscheibe aus zumindest zwei parallel beabstandeten und mittels eines randseitig umlaufend ausgebildeten Randverbunds miteinander verbundenen Glasscheiben aufgebaut ist und der Randverbund unter Ausbildung einer Nut von den Stoßkanten der Glasscheiben zurückspringt, wobei zur Verbindung mehrerer solcher, in einer Ebene angeordneten, Brandschutzscheiben und/ oder zur Befestigung der Brandschutzscheibe an der Haltekonstruktion ein als Feder ausgebildetes Verbindungselement in die Nut der Brandschutzscheibe formschlüssig eingesetzt ist, wobei die Brandschutzverglasung wenigstens zwei Brandschutzscheiben umfasst, die auf Stoß weitestgehend fugenfrei zueinander angeordnet und miteinander über das Verbindungselement verbunden sind, wobei das Verbindungselement zumindest eine Ausnehmung aufweist, in die ein Formkörper aus einem intumeszierenden, wie zum Beispiel silikatischen Material eingesetzt ist.

Der vorliegenden Erfindung liegt die Erkenntnis zugrunde, dass durch Verbindung solcher Brandschutzscheiben mit randseitiger Nut mittels eines als Feder ausgestalteten Verbindungselements eine Trockenverglasung realisierbar ist.

Darunter wird eine Art der Verglasung verstanden, die ohne den Einsatz von aushärtenden Dichtungsmassen, wie Silikon-, Acryl- oder Brandschutzmassen auskommt, das heißt vor Ort aufgebaut werden kann, und dennoch zuverlässigen Brand- und Rauchschutz gewährt.

Durch die Trockenmontage ist nicht nur der Versiegelungsschritt beim Aufbau einer solchen Verglasung überflüssig, es ist auch die einfache Demontage der Brandschutzverglasung gewährleistet, ohne dass eine Dichtungsmasse weggeschnitten werden müsste oder die Bauteile von Dichtungsmasse vor deren Wiederverwendung zu befreien wären. So kann beiepielsweise der Austausch einer einzelnen Brandschutzscheibe in einer Brandschutzverglasung mit vergleichbar niedrigem Material- und Zeitaufwand erfolgen.

Im Rahmen der vorliegenden Erfindung sind prinzipiell sämtliche bekannten Typen von Brandschutzscheiben einsetzbar, die eine umlaufende Nut aufweisen. Dies können mehrlagige Brandschutzscheiben mit innenliegender Funktionsschicht aus einem intumeszierenden Material sein, die gewünschtenfalls noch weitere Zwischenschichten aufweisen können. Die intumeszierenden Schichten sind im Normalfall transparent, schäumen jedoch bei Einwirkung von Hitze auf und werden hierdurch undurchsichtig. Hierdurch wird die Durchlässigkeit der Brandschutzscheibe gegenüber Wärmestrahlung drastisch reduziert. Das Aufschäumen wird durch die Abspaltung bzw. Verdampfen gasförmiger Bestandteile des intumeszierenden Materials hervorgerufen, wie beispielsweise von Wasser, wodurch neben der Trübung eine zusätzliche Kühlung der Scheibe und der damit in unmittelbarem Kontakt stehenden Bauteile erzielt wird. Außerdem führt die mit dem Aufschäumen verbundene Volumenvergrößerung dazu, dass das intumeszierende Mittel an den Stoßkanten der Brandschutzscheiben austritt und damit die Fugen zu angrenzenden Bauteilen zusätzlich abdichtet. Die intumeszierende Schicht kann beispielsweise eine Mischung aus Glycerin und Wasserglas aufweisen.

Die im Rahmen der vorliegenden Erfindung bevorzugt eingesetzten Brandschutzscheiben sind mit einem Brandschutzgel gefüllt, die intumeszierende Schicht besteht also aus einem Brandschutzgel bzw. Hydrogel. Mit Brandschutzgel bzw. Hydrogel gefüllte Brandschutzscheiben sind beispielsweise in der EP 1 820 931 A1 und in der DE 10 2005 018 842 A1 beschrieben. Solche Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse besitzen. Das bedeutet nicht nur einen einfacheren Transport der Scheiben, sondern auch, dass die Halterungen für die Brandschutzverglasung wegen der geringeren Last leichter ausgelegt werden können. Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen üblicherweise aus zwei parallel beabstandeten Glasscheiben, die über ein in ihren Randbereichen zwischen den Glasscheiben liegendes umlaufendes Abstandshalteprofil, beispielsweise in Form eines Polyurethan-Randverbunds, fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt.

Unter einer Haltekonstruktion wird im Sinne der vorliegenden Erfindung die äußere Begrenzung der Brandschutzverglasung verstanden, mit der die Verglasung an einem beziehungsweise innerhalb eines Bauwerks befestigt werden kann. Dies kann ein umlaufend ausgebildeter Rahmen sein, der mit dem Mauerwerk eines Gebäudes verschraubt ist. Die Haltekonstruktion kann aus jedweden für Brandschutzverglasungen üblicherweise eingesetzten Materialien bestehen, insbesondere aus Stahl, Messing, Aluminium, oder Holz/Holzwerkstoffen. Auch Verbundkonstruktionen aus mehreren dieser Materialien sind möglich.

In weiterer Ausgestaltung der erfindungsgemäßen Brandschutzverglasung umfasst diese wenigstens zwei in einer Ebene angeordnete Brandschutzscheiben, die unter Ausbildung einer Fuge zwischen den Glasscheiben auf Stoß zueinander angeordnet und miteinander über das Verbindungselement verbunden sind, wobei in die Fuge ein Dichtungsprofil formschlüssig eingesetzt ist. Hierdurch kann auf die Verwendung aushärtbarer Silikondichtmassen verzichtet werden, was eine einfache Montage und vor allem auch Demontage der Verglasung oder Austausch einzelner Elemente ohne großen Aufwand ermöglicht. Die Breite der Fuge kann durch die Anpassung der Breite des Verbindungselements in Relation zur Tiefe der Nuten der miteinander zu verbindenden Brandschutzscheiben angepasst werden. Gleichzeitig ist es hierdurch möglich, die Breite der Brandschutzverglasung geringfügig anzupassen.

Die eingesetzten Dichtungsprofile können aus jedem, für diesen Zweck geeigneten Material gefertigt sein, wie beispielsweise Gummi oder Silikonkautschuk. Auch die Verwendung von Dichtungsprofilen mit Brandschutzeigenschaften ist möglich. Die Dichtungsprofile werden beispielsweise im Klemmsitz in der Fuge zwischen den Scheiben gehalten. Zusätzlich oder alternativ hierzu kann das Dichtungsprofil auf dem zwischen den Brandschutzscheiben eingesetzten Verbindungselement befestigt sein.

Die Brandschutzverglasung umfasst erfindungsgemäß zwei Brandschutzscheiben, die auf Stoß weitestgehend fugenfrei zueinander angeordnet und miteinander über das Verbindungselement verbunden sind. Bei dieser Variante wird die Breite des Verbindungselements so gewählt, dass diese in etwa der Summe der Nuttiefen der zu verbindenden Brandschutzscheiben entspricht oder nur geringfügig breiter ist als diese. Da zwischen den Stoßkanten der Glasscheiben praktisch keine Fugen ausgebildet sind, kann bei dieser Ausführungsform auf den Einsatz zusätzlicher Dichtungsprofile verzichtet werden.

Wenn bei der Brandschutzverglasung drei oder mehr Brandschutzscheiben in einer Ebene miteinander verbunden sind, können die beiden oben beschriebenen Ausführungsformen auch miteinander kombiniert werden. Es kann also bei einer Verbindung zweier Brandschutzscheiben ein Dichtungsprofil eingesetzt werden und die andere Verbindung zweier Brandschutzscheiben weitestgehend fugenfrei ausgestaltet sein.

Nach einer bevorzugten Ausführungsform der erfindungsgemäßen Brandschutzverglasung ist bei der Verbindung mehrerer Brandschutzscheiben und/ oder bei der Befestigung der Brandschutzscheiben an der Haltekonstruktion keine aushärtende Dichtungsmasse eingesetzt. Hierunter werden Dichtungsmassen verstanden, die im pastösen Zustand in die zu überbrückende Fuge eingespritzt werden und anschließend durch Verdampfen eines Lösungsmittels und/ oder unter Polymerisation der Bestandteile der Dichtungsmasse aushärten.

Die erfindungsgemäße Brandschutzverglasung kann über eine Vielzahl an Brandschutzscheiben verfügen. Es können mehrere Brandschutzscheiben in einer Ebene über- und/ oder nebeneinander angeordnet und miteinander über Verbindungselemente verbunden sein.

In weiterer Ausgestaltung der erfindungsgemäßen Brandschutzverglasung ist die Haltekonstruktion als umlaufende Rahmenkonstruktion, vorzugsweise in Form eines Holz-/Holzwerkstoffrahmens, ausgebildet und weist an wenigstens einer den Brandschutzscheiben zugewandten Seiten eine Nut zur Aufnahme des Verbindungselements auf. Dies ist besonders vorteilhaft, weil auf diese Weise zwischen der Haltekonstruktion und den Brandschutzscheiben dieselbe Verbindungsart zum Einsatz kommen kann, wie bei der Verbindung der Brandschutzscheiben untereinander. Die Form der Nut kann in weiten Bereichen variieren. So kann die Nut einen quadratischen, rechteckigen, halbkreisförmigen oder auch dreieckigen Querschnitt besitzen. Zweckmäßigerweise ist das Profil des Verbindungselements an den Nutquerschnitt angepasst.

In die Nut der Haltekonstruktion kann zusätzlich ein Formkörper aus intumeszierendem Material eingebracht sein, insbesondere im Bereich des Nutbodens. Dessen Aufschäumen sorgt im Brandfall für eine bessere Abdichtung zwischen Haltekonstruktion und Brandschutzscheibe.

In vorteilhafter Ausgestaltung der erfindungsgemäßen Brandschutzverglasung entspricht die Tiefe der Nuten der Haltekonstruktion der Tiefe der Nuten der Brandschutzscheiben. Die Materialstärke eines gegebenenfalls in die Nut der Haltekonstruktion einzusetzenden intumeszierenden Materials ist hierbei insofern zu berücksichtigen, als dass die Nut in der Haltekonstruktion entsprechend tiefer ausgestaltet sein sollte. Dies hat den Vorteil, dass für die Verbindung zwischen Haltekonstruktion und Brandschutzscheiben dieselben Verbindungselemente eingesetzt werden können, wie zur Verbindung der Scheiben untereinander. Dadurch werden weniger unterschiedliche Bauteile benötigt, was eine fehlerfreie Montage erleichtert.

Es ist jedoch auch möglich, dass eines oder mehrere der Verbindungselemente unmittelbar an wenigstens einer den Brandschutzscheiben zugewandten Seiten der Haltekonstruktion ausgebildet ist. So kann beispielsweise am horizontal am Boden verlaufenden Teilstück und einem sich hieran anschließenden vertikalen Teilstück der Haltekonstruktion das Verbindungselement in Form einer durchgehenden Feder ausgebildet sein. Zur Montage der Verglasung können die Brandschutzscheiben auf den horizontalen Teil dieser Feder gesetzt und gegen den vertikalen Teil der Feder geschoben werden. Zur Fixierung der Brandschutzscheibe kann dann zur Verbindung der Nuten der Oberkante der Brandschutzscheibe und der Oberkante der Haltekonstruktion ein Verbindungselement eingeschoben werden.

Die erfindungsgemäß eingesetzten Verbindungselemente können aus Holz/Holzwerkstoff bestehen. Die Verbindungselemente weisen außerdem eine Ausnehmung auf, in die ein Formkörper aus einem intumeszierenden, wie zum Beispiel silikatischen Material eingesetzt ist. Im Brandfall sorgt die Intumeszenz des Formkörpers für eine zusätzliche Abdichtung der Verbindung. Vor allem, wenn auf die Verwendung von Dichtungsprofilen verzichtet wird, ist dieser Effekt von Vorteil. Gleichzeitig sorgt die Intumeszenz für eine Kühlung des Verbindungselements, was dessen Widerstandsdauer im Brandfall verlängert.

Nach einer weiter bevorzugten Ausgestaltung der erfindungsgemäßen Brandschutzverglasung stellt das Verbindungselement und gewünschtenfalls das Dichtungsprofil die einzige Verbindung zwischen zwei nebeneinander angeordneten Brandschutzscheiben dar. So ist insbesondere der Einsatz zusätzlicher Profile, beispielsweise vertikaler Profile, nicht erforderlich, so dass die Brandschutzverglasung einen sehr hohen Lichtdurchlass ermöglicht und durch Verzicht auf zusätzliche Profile ein filigranes Erscheinungsbild besitzt.

Die vorliegende Erfindung betrifft ferner ein Verfahren zur Erstellung einer Brandschutzverglasung zur Vermeidung des Durchtritts von Feuer und Rauch im Brandfall von einem Raum in einen anderen, mit wenigstens einer Brandschutzscheibe und einer die Brandschutzscheibe tragenden Haltekonstruktion, wobei die Brandschutzscheibe aus zumindest zwei parallel beabstandeten und mittels eines randseitig umlaufend ausgebildeten Randverbunds miteinander verbundenen Glasscheiben aufgebaut ist und der Randverbund unter Ausbildung einer Nut von den Stoßkanten der Glasscheiben zurückspringt, wobei zur Verbindung mehrerer solcher Brandschutzscheiben und/ oder zur Befestigung der Brandschutzscheibe an der Haltekonstruktion ein als Feder ausgebildetes Verbindungselement formschlüssig in die Nut der Brandschutzscheibe eingesetzt wird, wobei die wenigstens zwei Brandschutzscheiben der Brandschutzverglasung auf Stoß weitestgehend fugenfrei zueinander angeordnet und miteinander über das Verbindungselement verbunden werden, wobei in eine in dem Verbindungselement vorgesehene Ausnehmung ein Formkörper aus einem intumeszierenden, wie zum Beispiel silikatischen Material eingesetzt wird.

Der erfindungsgemäße Aufbau erlaubt eine einfache modulare Montage der Brandschutzverglasung. Sollen mehrere Brandschutzscheiben in einer Ebene miteinander verbunden werden, so können diese sukzessive in die Haltekonstruktion eingesetzt werden. Dabei wird die erste der einzusetzenden Scheiben entweder direkt auf an der Haltekonstruktion ausgebildete Verbindungselemente aufgesetzt oder, wenn die Haltekonstruktion ausschließlich Nuten aufweist, durch Einschieben von Verbindungselementen mit dieser verbunden. In die Nut der freien vertikalen Stoßkante dieser ersten Brandschutzscheibe wird nun ein weiteres Verbindungselement eingesetzt. Damit dieses nicht heraus fällt, kann die Stärke des Verbindungselements so gewählt sein, dass es nur unter Anwendung eines leichten Drucks in die Scheibennut eingesetzt werden kann und dort im Klemmsitz gehalten wird. Anschließend wird die nächste Scheibe in die Tragkonstruktion eingesetzt und gegen das Verbindungselement geschoben, bis dieses den Nutboden der zweiten eingesetzten Scheibe erreicht. In gegebenenfalls ausgebildete Fugen zwischen den Stoßkanten der Scheiben können anschließend in oben beschriebener Weise Dichtungsprofile eingesetzt werden, so dass bei der Verbindung der Brandschutzscheiben und/ oder bei der Befestigung der Brandschutzscheibe an der Haltekonstruktion keine aushärtende Dichtungsmasse verwendet werden müssen.

Dieser erfindungsgemäße Aufbau einer Brandschutzverglasung ermöglicht neben der einfachen Montage vor Ort auch das Bereitstellen von vorgefertigten Modulen beziehungsweise Halbfertigteilen, welche am Bau nur geringer Anpassungen im Bereich des Abschlusses der Brandschutzverglasung bedürfen. Auf diese Weise lassen sich Verzögerungszeiten beim Bau vermeiden beziehungsweise wesentlich mindern.

Weitere Einzelheiten, Merkmale und Vorteile der vorliegenden Erfindung werden nachfolgend anhand der in den folgenden Figuren dargestellten Ausführungsbeispiele näher erläutert. Dabei zeigt
- Fig. 1: einen Teil einer ersten Ausführungsform einer erfindungsgemäßen Brandschutzverglasung in der Frontalansicht,
- Fig. 2: eine Schnittansicht entlang der in Fig. 1 mit I-I bezeichneten waagerechten Linie,
- Fig. 3: einen senkrechten Schnitt entlang der in Fig. 1 mit II-II bezeichneten Linie und
- Fig. 4: eine zweite Ausführungsform einer erfindungsgemäßen Brandschutzverglasung mit mehreren in einer Ebene sowohl über- als auch nebeneinander angeordneten Brandschutzscheiben.

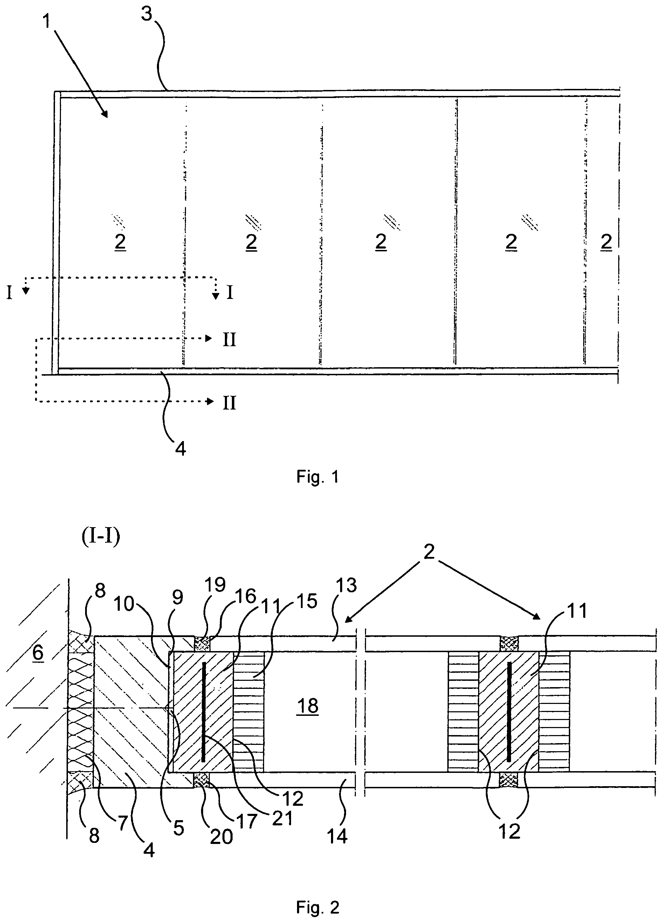

In Fig. 1 ist ein erstes Ausführungsbeispiel einer erfindungsgemäßen Brandschutzverglasung 1 schematisch dargestellt. Die Brandschutzverglasung 1 besteht aus einer Vielzahl in einer Ebene nebeneinander angeordneter und mit einem Brandschutzgel gefüllter Brandschutzscheiben 2, welche in einer Haltekonstruktion 3 fixiert sind. Die Haltekonstruktion 3 ist aus mehreren einzelnen Holzprofilen 4 zusammengesetzt und bildet einen umlaufenden Profilrahmen.

In Fig. 2 ist eine Schnittansicht entlang der in Fig. 1 mit I-I bezeichneten Linie dargestellt. Ein vertikal verlaufendes Holzprofil 4 der Haltekonstruktion 3 ist mittels einer Schraube 5 an einer Laibung 6 angebracht. Zwischen dem Holzprofil 4 und der Laibung 6 ist ferner ein Anschlusselement 7 vorgesehen, wobei die vertikal beidseitig zwischen Holzprofil 4 und Laibung 6 verlaufenden Anschlussfugen mit einem Dichtungsmittel 8 verfüllt sind. Auf seiner der Laibung 6 gegenüberliegenden Seite ist das Holzprofil 4 mit einer Nut 9 von rechteckigem Querschnitt versehen, wobei im Bereich des Nutbodens ein Formkörper 10 aus intumeszierendem Material eingebracht ist.

In der Nut 9 des Holzprofils 4 ist ein Verbindungselement 11 eingesetzt, dessen über die Nut 9 des Holzprofils 4 herausragender Bereich in eine reckteckig ausgeformte Nut 12 der Brandschutzscheibe 2 eingreift.

Die Brandschutzscheibe 2 setzt sich aus zwei parallel zueinander angeordneten Glasscheiben 13, 14 aus Einscheibensicherheitsglas zusammen, die mittels eines umlaufend ausgebildeten Randverbundes 15 aus Polyurethan seitlich beabstandet miteinander verbunden sind. Der Randverbund 15 ist im Bereich zwischen den Glasscheiben 13, 14 angeordnet und springt in Bezug auf deren Stoßkanten 16, 17 unter Ausbildung der Nut 12 zurück. Die Tiefe der Nut 9 des Holzprofils 4 entspricht in etwa derjenigen der Nut 12 der Brandschutzscheibe 2. Der durch die Glasscheiben 13, 14 und den Randverbund 15 eingeschlossene Raum ist mit einem Brandschutzgel 18 gefüllt. Vorliegend weisen die Brandschutzscheiben 2 eine Stärke von 60 mm auf.

Das Verbindungselement 11 weist eine größere Breite als die Summe der Tiefen der Nuten 9, 12 der Brandschutzscheibe 2 und des Holzprofils 4 auf, so dass zwischen den Stoßkanten 16, 17 der Glasscheiben 13, 14 und dem Holzprofil 4 Anschlussfugen gebildet sind, die mit Dichtungsprofilen 19, 20 ausgefüllt sind. Die Dichtungsprofile 19, 20 sind am Verbindungselement 11 befestigt, welches über eine Ausnehmung verfügt, in die ein Formkörper 21 aus einem intumeszierenden Material eingesetzt ist.

Im rechten Teil der in Fig. 2 dargestellten Schnittansicht ist eine Verbindung zwischen zwei benachbarten Brandschutzscheiben 2 dargestellt. Beide Brandschutzscheiben 2 besitzen denselben, oben beschriebenen Aufbau, so dass beide jeweils über einen umlaufenden Randverbund 15 verfügen, der gegenüber den Stoßkanten 16, 17 der Glasscheiben 13, 14 zurückspringt und hierdurch Nuten 12 ausbildet. In dem sich zwischen den Nuten 12 bildenden Hohlraum ist wiederum ein Verbindungselement 11 eingesetzt, mit dem Dichtungsprofile 19, 20 zum Verschließen der zwischen den Stoßkanten 16, 17 ausgebildeten Anschlussfugen verbunden sind.

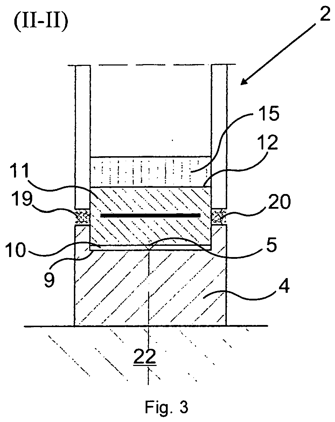

In Fig. 3 ist eine Schnittdarstellung durch die in Fig. 1 dargestellte Brandschutzverglasung 1 entlang der Linie II-II zu sehen.

Ein horizontal verlaufendes Holzprofil 4 der Haltekonstruktion 3 ist mittels einer Schraube 5 am Boden 22 befestigt. Das horizontal verlaufende Holzprofil 4 ist auf seiner dem Boden 22 gegenüberliegenden Seite mit einer Nut 9 versehen, deren Boden mit einem Formkörper 10 aus intumeszierendem Material bedeckt ist. Wie aus der in Fig. 3 gezeigten Darstellung zu erkennen ist, ist die an der Brandschutzscheibe 2 ausgebildete Nut 12 auch an den horizontal verlaufenden Seiten ausgebildet. Die Brandschutzscheibe 2 ist mit dem horizontal verlaufenden Holzprofil 4 mittels eines in die Nuten 9, 12 dieser beiden Bauteile eingreifenden Verbindungselements 11 verbunden. Die zwischen den Stoßkanten 16, 17 der Glasscheiben 13, 14 und dem Holzprofil 4 ausgebildeten Anschlussfugen sind mit Dichtungsprofilen 19, 20 ausgefüllt, welche jeweils am Verbindungselement 11 befestigt sind.

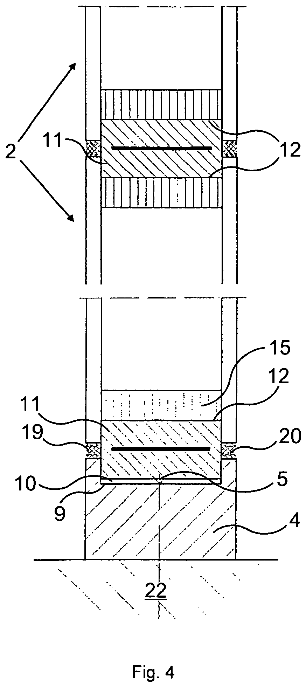

In Fig. 4 ist eine vertikale Schnittansicht einer zweiten Ausführungsform der erfindungsgemäßen Brandschutzverglasung 1 dargestellt, bei der die Brandschutzscheiben 2 nicht nur in einer Ebene neben-, sondern auch übereinander angeordnet sind. Die Art der Verbindung zwischen den Brandschutzscheiben 2 entspricht derjenigen, wie sie unter Fign. 2 und 3 für nebeneinander angeordnete Brandschutzscheiben 2 erörtert wurde.

### Bezugszeichenliste:

- 1.: Brandschutzverglasung
- 2.: Brandschutzscheibe
- 3.: Haltekonstruktion
- 4.: Holzprofil
- 5.: Schraube
- 6.: Laibung
- 7.: Anschlusselement
- 8.: Dichtungsmittel
- 9.: Nut
- 10.: Formkörper
- 11.: Verbindungselement
- 12.: Nut
- 13.: Glasscheibe
- 14.: Glasscheibe
- 15.: Randverbund
- 16.: Stoßkante
- 17.: Stoßkante
- 18.: Brandschutzgel
- 19.: Dichtungsprofil
- 20.: Dichtungsprofil
- 21.: Formkörper

## Patentansprüche

1. Brandschutzverglasung (1) zur Vermeidung des Durchtritts von Feuer und Rauch im Brandfall von einem Raum in einen anderen, mit wenigstens einer Brandschutzscheibe (2) und einer die Brandschutzscheibe (2) tragenden Haltekonstruktion (3), wobei die Brandschutzscheibe (2) aus zumindest zwei parallel beabstandeten und mittels eines randseitig umlaufend ausgebildeten Randverbunds (15) miteinander verbundenen Glasscheiben (13, 14) aufgebaut ist und der Randverbund (15) unter Ausbildung einer Nut (12) von den Stoßkanten (16, 17) der Glasscheiben (13, 14) zurückspringt,
wobei zur Verbindung mehrerer solcher, in einer Ebene angeordneten, Brandschutzscheiben (2) und zur Befestigung der Brandschutzscheibe (2) an der Haltekonstruktion (3) ein als Feder ausgebildetes Verbindungselement (11) in die Nut (12) der Brandschutzscheibe (2) formschlüssig eingesetzt ist, die Brandschutzverglasung (1) wenigstens zwei Brandschutzscheiben (2) umfasst, die auf Stoß weitestgehend fugenfrei zueinander angeordnet und miteinander über das Verbindungselement (11) verbunden sind,
**dadurch gekennzeichnet, dass** das Verbindungselement (11) zumindest eine Ausnehmung aufweist, in die ein Formkörper (21) aus einem intumeszierenden, wie zum Beispiel silikatischen Material eingesetzt ist.

2. Brandschutzverglasung nach Anspruch 1, **dadurch gekennzeichnet, dass** die Brandschutzverglasung (1) wenigstens zwei in einer Ebene angeordnete Brandschutzscheiben (2) umfasst, die unter Ausbildung einer Fuge zwischen den Glasscheiben (13, 14) auf Stoß zueinander angeordnet und miteinander über das Verbindungselement (11) verbunden sind, wobei in die Fuge ein Dichtungsprofil (19, 20) formschlüssig eingesetzt ist.

3. Brandschutzverglasung nach einem der vorstehenden Ansprüche, **dadurch gekennzeichnet, dass** bei der Verbindung mehrerer Brandschutzscheiben (2) und/oder bei der Befestigung der Brandschutzscheiben (2) an der Haltekonstruktion (3) keine aushärtende Dichtungsmasse eingesetzt ist.

4. Brandschutzverglasung nach einem der vorstehenden Ansprüche, **dadurch gekennzeichnet, dass** mehrere Brandschutzscheiben (2) in einer Ebene über- und/oder nebeneinander angeordnet und miteinander über Verbindungselemente (11) verbunden sind.

5. Brandschutzverglasung nach einem der vorstehenden Ansprüche, **dadurch gekennzeichnet, dass** die Haltekonstruktion (3) als umlaufende Rahmenkonstruktion, vorzugsweise in Form eines Holzrahmens, ausgebildet ist und an wenigstens einer den Brandschutzscheiben (2) zugewandten Seiten eine Nut (9) zur Aufnahme des Verbindungselements (11) aufweist.

6. Brandschutzverglasung nach Anspruch 5, **dadurch gekennzeichnet, dass** in die Nut (9) der Haltekonstruktion (3), insbesondere im Bereich des Nutbodens, ein Formkörper (10) aus intumeszierendem Material eingebracht ist.

7. Brandschutzverglasung nach Anspruch 5 oder 6, **dadurch gekennzeichnet, dass** die Tiefe der Nut (9) der Haltekonstruktion (3) der Tiefe der Nut (12) der Brandschutzscheibe (2) entspricht.

8. Brandschutzverglasung nach einem der vorstehenden Ansprüche, **dadurch gekennzeichnet, dass** das Verbindungselement (11) an wenigstens einer den Brandschutzscheiben (2) zugewandten Seiten der Haltekonstruktion (3) ausgebildet ist.

9. Brandschutzverglasung nach einem der vorstehenden Ansprüche, **dadurch gekennzeichnet, dass** das Verbindungselement (11) aus Holz/Holzwerkstoff besteht.

10. Brandschutzverglasung nach einem der vorstehenden Ansprüche, **dadurch gekennzeichnet, dass** das Verbindungselement (11) und gewünschtenfalls das Dichtungsprofil (19, 20) die einzige Verbindung zwischen zwei nebeneinander angeordneten Brandschutzscheiben (2) darstellt.

11. Brandschutzverglasung nach einem der vorstehenden Ansprüche, **dadurch gekennzeichnet, dass** die Brandschutzscheibe (2) eine mit einem Brandschutzgel gefüllte Brandschutzscheibe (2) ist.

12. Verfahren zur Erstellung einer Brandschutzverglasung (1) zur Vermeidung des Durchtritts von Feuer und Rauch im Brandfall von einem Raum in einen anderen, mit wenigstens einer Brandschutzscheibe (2) und einer die Brandschutzscheibe (2) tragenden Haltekonstruktion (3), wobei die Brandschutzscheibe (2) aus zumindest zwei parallel beabstandeten und mittels eines randseitig umlaufend ausgebildeten Randverbunds (15) miteinander verbundenen Glasscheiben (13, 14) aufgebaut ist und der Randverbund (15) unter Ausbildung einer Nut (12) von den Stoßkanten (16, 17) der Glasscheiben (13, 14) zurückspringt,
zur Verbindung mehrerer solcher Brandschutzscheiben (2) und zur Befestigung der Brandschutzscheibe (2) an der Haltekonstruktion (3) ein als Feder ausgebildetes Verbindungselement (11) formschlüssig in die Nut (12) der Brandschutzscheibe (2) eingesetzt wird, die wenigstens zwei Brandschutzscheiben (2) der Brandschutzverglasung (1) auf Stoß weitestgehend fugenfrei zueinander angeordnet und miteinander über das Verbindungselement (11) verbunden werden,
**dadurch gekennzeichnet, dass** in eine in dem Verbindungselement (11) vorgesehene Ausnehmung ein Formkörper (21) aus einem intumeszierenden wie zum Beispiel silikatischen Material eingesetzt wird.

13. Verfahren nach Anspruch 12, **dadurch gekennzeichnet, dass** bei der Verbindung der Brandschutzscheiben (2) und/oder bei der Befestigung der Brandschutzscheibe (2) an der Haltekonstruktion (3) keine aushärtende Dichtungsmasse verwendet wird.

## Claims

1. A fire protection glazing (1) for preventing fire and smoke from penetrating from one room into another in case of fire, comprising at least one fire protection pane (2) and a holding construction (3) carrying the fire protection pane (2), wherein the fire protection pane (2) is composed of at least two glass panes (13, 14) spaced apart in parallel from each other and connected to each other by means of an edging compound (15) that extends circumferentially along the edge, and the edging compound (15) recoils behind the abutting edges (16, 17) of the glass panes (13, 14) while forming a groove (12),
wherein a connecting element (11) configured as a tongue is inserted into the groove (12) of the fire protection pane (2) in a positive-locking manner for connecting several ones of such fire protection panes (2) arranged in one plane and for fixing the fire protection pane (2) at the holding construction (3), and the fire protection glazing (1) comprises at least two fire protection panes (2) which are arranged such that they abut against each other almost without any joint and are connected to each other via the connecting element (11), **characterized in that** the connecting element (11) comprises at least one recess, into which a moulded body (21) made of an intumescent material, such as for example a siliceous material, is inserted.

2. A fire protection glazing according to claim 1, **characterized in that** the fire protection glazing (1) comprises at least two fire protection panes (2) arranged in one plane, which fire protection panes (2) are abutting against each other while forming a joint between the glass panes (13, 14) and are connected to each other via the connecting element (11), wherein a sealing profile (19, 20) is positively inserted into the joint.

3. A fire protection glazing according to one of the preceding claims, **characterized in that** no hardening sealing compound is used for the connection of several fire protection panes (2) and/or for the fixation of the fire protection panes (2) at the holding construction (3).

4. A fire protection glazing according to one of the preceding claims, **characterized in that** several fire protection panes (2) are arranged above one another and/or next to one another in one plane and are connected to each other via connecting elements (11).

5. A fire protection glazing according to one of the preceding claims, **characterized in that** the holding construction (3) is configured as a circumferential frame construction, preferably in form of a wooden frame, and it comprises a groove (9) for receiving the connecting element (11) on at last one of the sides facing the fire protection panes (2).

6. A fire protection glazing according to claim 5, **characterized in that** a moulded body (10) made of intumescent material is inserted into the groove (9) of the holding construction (3), in particular in the area of the bottom of the groove.

7. A fire protection glazing according to claim 5 or claim 6, **characterized in that** the depth of the groove (9) of the holding construction (3) corresponds to the depth of the groove (12) of the fire protection pane (2).

8. A fire protection glazing according to one of the preceding claims, **characterized in that** the connecting element (11) is formed on at least one of the sides of the holding construction (3) that are facing the fire protection panes (2).

9. A fire protection glazing according to one of the preceding claims, **characterized in that** the connecting element (11) is made of wood/wood material.

10. A fire protection glazing according to one of the preceding claims, **characterized in that** the connecting element (11) and, if desired, the sealing profile (19, 20), represents the only connection between two fire protection panes (2) arranged next to each other.

11. A fire protection glazing according to one of the preceding claims, **characterized in that** the fire protection pane (2) is a fire protection pane (2) filled with a fire protection gel.

12. A method for creating a fire protection glazing (1) for preventing fire and smoke from penetrating from one room into another in case of fire, comprising at least one fire protection pane (2) and a holding construction (3) carrying the fire protection pane (2), wherein the fire protection pane (2) is composed of at least two glass panes (13, 14) spaced apart in parallel from each other and connected to each other by means of an edging compound (15) that extends circumferentially along the edge, and the edging" compound (15) recoils behind the abutting edges (16, 17) of the glass panes (13, 14) while forming a groove (12),
wherein a connecting element (11) configured as a tongue is inserted into the groove (12) of the fire protection pane (2) in a positive-locking manner for connecting several ones of such fire protection panes (2) and for fixing the fire protection pane (2) at the holding construction (3), and the fire protection glazing (1) comprises at least two fire protection panes (2) which are arranged such that they abut against each other almost without any joint and are connected to each other via the connecting element (11),
**characterized in that** a moulded body (21) made of an intumescent material, such as for example a siliceous material, is inserted into a recess provided in the connecting element (11).

13. A method according to claim 12, **characterized in that** no hardening sealing compound is used for the connection of the fire protection panes (2) and/or for the fixation of the fire protection panes (2) at the holding construction (3).

## Revendications

1. Vitrage pare-feu (1) pour empêcher le feu et la fumée de passer d'une pièce à une autre en cas d'incendie, comprenant au moins une vitre pare-feu (2) et une structure de support (3) portant la vitre pare-feu (2), la vitre pare-feu (2) étant composée d'au moins deux surfaces en verre (13, 14) espacées parallèlement l'une de l'autre et reliées l'une à l'autre par un joint périphérique (15), qui s'étend de manière circonférentielle autour du bord, et le joint périphérique (15) étant décalé derrière les bords de butée (16, 17) des surfaces en verre (13, 14) en formant une rainure (12),
dans lequel un élément de liaison (11) configuré comme à languette est inséré par engagement positif dans la rainure (12) de la vitre pare-feu (2) pour relier plusieurs de telles vitres pare-feu (2) disposées dans un plan et pour fixer la vitre pare-feu (2) à la structure de support (3), et le vitrage pare-feu (1) comprend au moins deux vitres pare-feu (2), qui viennent buter l'une contre l'autre pratiquement sans joint, et qui sont reliées l'une à l'autre via l'élément de liaison (11), **caractérisé en ce que** l'élément de liaison (11) comprend au moins un évidement, dans lequel est inséré un corps moulé (21) en un matériau intumescent, tel que par exemple un matériau siliceux.

2. Vitrage pare-feu selon la revendication 1, **caractérisé en ce que** le vitrage pare-feu (1) comprend au moins deux vitres pare-feu (2) disposées dans un plan, lesquelles vitres pare-feu (2) viennent buter l'une contre l'autre en formant un joint entre les surfaces en verre (13, 14) et elles sont reliées l'une à l'autre par l'élément de liaison (11), un profilé d'étanchéité (19, 20) étant inséré par engagement positif dans le joint.

3. Vitrage pare-feu selon l'une des revendications précédentes, **caractérisé en ce qu'**on n'utilise aucun matériau de scellement durcissant pour la liaison de plusieurs vitres pare-feu (2) et/ou pour la fixation des vitres pare-feu (2) à la structure de support (3).

4. Vitrage pare-feu selon l'une des revendications précédentes, **caractérisé en ce que** plusieurs vitres pare-feu (2) sont disposées l'une au-dessus de l'autre et/ou l'une à côté de l'autre dans un plan et reliées l'une à l'autre par moyen d'éléments de liaison (11).

5. Vitrage pare-feu selon l'une des revendications précédentes, **caractérisé en ce que** la structure de support (3) est configurée comme une construction de cadre circonférentielle, de préférence en forme de cadre en bois, et elle comprend une rainure (9) pour recevoir l'élément de liaison (11) sur au moins un côté faisant face aux vitres pare-feu (2).

6. Vitrage pare-feu selon la revendication 5, **caractérisé en ce qu'**un corps moulé (10) en matériau intumescent est inséré dans la rainure (9) de la structure de support (3), notamment dans la zone du fond de la rainure.

7. Vitrage pare-feu selon la revendication 5 ou la revendication 6, **caractérisé en ce que** la profondeur de la rainure (9) de la structure de support (3) correspond à la profondeur de la rainure (12) de la vitre pare-feu (2).

8. Vitrage pare-feu selon l'une des revendications précédentes, **caractérisé en ce que** l'élément de liaison (11) est formé sur au moins l'un des côtés de la structure de support (3), lequel fait face aux vitres pare-feu (2).

9. Vitrage pare-feu selon l'une des revendications précédentes, **caractérisé en ce que** l'élément de liaison (11) est fabriqué en bois/matériaux en bois.

10. Vitrage pare-feu selon l'une des revendications précédentes, **caractérisé en ce que** l'élément de liaison (11), et si désiré le profile d'étanchéité, représente la seule liaison entre deux vitres pare-feu (2) disposées l'une à côté de l'autre.

11. Vitrage pare-feu selon l'une des revendications précédentes, **caractérisé en ce que** la vitre pare-feu (2) est une vitre pare-feu (2) remplie d'un gel coupe-feu.

12. Procédé de création d'un vitrage pare-feu (1) pour empêcher le feu et la fumée de passer d'une pièce à une autre en cas d'incendie, comprenant au moins une vitre pare-feu (2) et une structure de support (3) portant la vitre pare-feu (2), la vitre pare-feu (2) étant composée d'au moins deux surfaces en verre (13, 14) espacées parallèlement l'une de l'autre et reliées l'une à l'autre par un joint périphérique (15), qui s'étend de manière circonférentielle autour du bord, et le joint périphérique (15) étant décalé derrière les bords de butée (16, 17) des surfaces en verre (13, 14) en formant une rainure (12), dans lequel un élément de liaison (11) configuré comme à languette est inséré par engagement positif dans la rainure (12) de la vitre pare-feu (2) pour relier plusieurs de telles vitres pare-feu (2) et pour fixer la vitre pare-feu (2) à la structure de support (3), et le vitrage pare-feu (1) comprend au moins deux vitres pare-feu (2), qui viennent buter l'une contre l'autre pratiquement sans joint, et qui sont reliées l'une à l'autre via l'élément de liaison (11), **caractérisé en ce qu'** un corps moulé (21) en un matériau intumescent, tel que par exemple un matériau siliceux, est inséré dans un évidement prévu dans l'élément de liaison.

13. Procédé selon la revendication 12, **caractérisé en ce qu'**on n'utilise aucun matériau de scellement durcissant pour la liaison de plusieurs vitres pare-feu (2) et/ou pour la fixation des vitres pare-feu (2) à la structure de support (3).
